# EUROPEAN PATENT APPLICATION

(11) **EP 4 592 995 A1**
(43) Date of publication of application: **30.07.2025**
(21) Application number: 25151692.8
(22) Date of filing: 14.01.2025
(51) Int. Cl.: G09F 21/04, G09F 27/00, G09F 13/00, G09F 13/04, B60Q 1/50, G09F 13/22

(54) **DESTINATION SIGN SYSTEM FOR A PUBLIC TRANSPORT VEHICLE**

(30) Priority: 23.01.2024 NL 2036877
(71) Applicant: Qbuzz B.V., 3812 GZ Amersfoort (NL)
(72) Inventor: WIJNGAARDEN, Epco, AMERSFOORT (NL)
(74) Representative: Algemeen Octrooi- en Merkenbureau B.V.

(57) **Abstract**

A destination sign system for a public transport vehicle, for indicating a destination of vehicle, wherein said system comprises an electronic sign and a controller, said electronic sign being arranged to be mounted on, or integrated with, the bodywork of the vehicle, to display an indication of the vehicle's route, and wherein said controller is in communicative connection with said electronic sign to control said indication displayed by said electronic sign, said controller interfacing with a vehicle bus for obtaining control signals comprising route information of said vehicle, and wherein said electronic sign is provided on, or integrated with the bodywork of the vehicle along multiple sides of said vehicle, and comprising light emitting diode, LED, light, wherein said controller is arranged to control a colour of said LED light in accordance with said vehicle's route obtained by said control signals through said interface with said vehicle bus.

## Description

### TECHNICAL FIELD

The present invention relates to a destination sign system for a public transport vehicle, for indicating a destination of vehicle.

### BACKGROUND

Public transport vehicles, such as buses, are essential modes of transportation in urban areas, catering to a large number of passengers daily. To ensure efficient transit and improve the overall passenger experience, it is crucial to provide accurate and easily visible destination information on these vehicles. Traditional static destination signs suffer from limited display capabilities and difficulties in real-time updates.

Existing destination sign systems on public transport vehicles often lack flexibility and fail to provide real-time updates of route information. Passengers may face confusion and inconvenience due to outdated or inaccurate destination displays. Moreover, the static signs do not adapt to changing conditions, potentially reducing their visibility during low-light situations.

One of the significant challenges faced by passengers of public transportation in locations with multiple vehicles with multiple routes, e.g. at a bus stop or bus station, is the difficulty and confusion in distinguishing and remembering which bus goes to which destination. In busy metropolitan areas with a vast network of buses operating different routes, this challenge becomes even more pronounced.

Passenger navigation within a complex bus system can lead to inconvenience, delays, and sometimes even missed connections. The existing destination sign systems on buses, often static and limited in their display capabilities, contribute to this problem. Passengers may find it hard to quickly identify the right bus for their intended destination, leading to confusion, overcrowding on specific routes, and inefficiencies in the overall public transportation system.

The present invention has for one of its goals to address the lack of an efficient and user-friendly destination sign system for buses and other types of publica transportation, operating in locations with multiple different routes. The existing static and conventional signs fail to provide real-time route updates and easy-to-understand information, leading to confusion and inconvenience for passengers. Consequently, there is a need for an improved destination sign system that can address these challenges and enhance the overall passenger experience in public transportation.

### SUMMARY

The present invention, in a first aspect, provides a destination sign system for a public transport vehicle, for indicating a destination of vehicle, wherein said system comprises an electronic sign and a controller, said electronic sign being arranged to be mounted on, or integrated with, the bodywork of the vehicle, to display an indication of the vehicle's route, and wherein said controller is in communicative connection with said electronic sign to control said indication displayed by said electronic sign, said controller interfacing with a vehicle bus for obtaining control signals comprising route information of said vehicle, and wherein said electronic sign is provided on, or integrated with the bodywork of the vehicle along multiple sides of said vehicle, and comprising light emitting diode, LED, light, wherein said controller is arranged to control a colour of said LED light in accordance with said vehicle's route obtained by said control signals through said interface with said vehicle bus.

The proposed destination sign system simplifies the process of identifying the correct bus and its route, enabling passengers to make informed decisions and navigate the bus network with ease. By providing dynamic, accurate, and easily visible route information, the patent seeks to eliminate confusion, reduce waiting times, and optimize the utilization of different bus routes. Furthermore, the patent intends to enhance the overall efficiency of public transportation systems in locations where multiple bus routes are available, benefiting both passengers and transportation authority's alike.

To this end, a destination sign system is proposed which can be used on public transport vehicles. Examples of such public transport vehicles include busses, trams and metro's but may also be used for other vehicles such as trains and the like. In general, each type of public transport in which destination sign systems are used, may be considered applicable applications for the present invention. As such, the skilled person will appreciate that the invention is not limited to the example most frequently used in the present application, of busses.

Public transport vehicle destination sign systems, or further also referred to as bus destination signs or bus route indication signs, indicate a destination of the vehicle. The destination also implies that a certain route is followed to arrive at that destination. The route has stops at certain locations. Hence, for users of the public transport it is of upmost importance to determine which bus (or other type of public transport) they should take to arrive at the designated destination, i.e. to have a quick, simple and straightforward identification of the correct bus.

To this end, known destination sign systems indicate a line number and/or a final destination of the bus. It has been found however, that this is not the most ideal way of route and final destination indication. The inventors suggest a more simple and more effective way of indication, which is typically used in other types of public transportation, i.e. in that of metro's. In some cities, metro lines have a dedicated color which indicates the line number or route of the metro. This is considered the most simple and effective way or route indication as it has been found that color can be recognized more easily than route numbers and more easily than destination indications. Metro's however may have a color indication which is painted or otherwise indicated on the metro vehicle since metro vehicles never switch routes. For busses and other vehicles this however does not apply since they may switch routes very frequently. Hence, providing the busses or such vehicles with fixed color indication, prevents these vehicles from being used in for other routes.

With the invention, a dynamic route indication or destination sign system is provided which is able to be configured in accordance with the current route for which the vehicle, e.g. bus in this example, is operated. To this end, the vehicle is provided with an electronic sign that is arranged to be mounted on, or integrated with the bodywork of the vehicle. With this sign, a display is provided which is an indication of the vehicles route. A controller drives the sign and since the sign comprises a LED light, an more preferably, multiple LED lights which are arranged for multi-color, the controller may provide a different control signal to the lights to change the color in accordance with the current route. Hence, if the bus is operating route 1, the corresponding color may be red, and when the bus changes to route 2, the color changes to blue for example. This way a simple and effective destination indication is provided which is arranged for dynamic switching.

The controller of the system is thus in communicative connection with the electronic sign and interfaces with the vehicle bus, and obtains control signals comprising route information. Based on this information, the controller can adjust the color and preferably also the intensity of the LED lights to match the specific route of the vehicle. This real-time adaptability ensures that passengers receive accurate destination information as the vehicle progresses along its route.

In an example, the electronic sign is retrofitted onto said bodywork of the vehicle along multiple sides of said vehicle.

The electronic sign is preferably housed in a housing which may be attached in a retrofit manner onto the bodywork of the vehicle. This has the effect that (official) inspections and checks that the bus has undergone can most likely be retained and the bus does not have to be inspected again because no structural changes have been made to the bus with such a retrofit sign.

Moreover, the sign may be detachable which allows the sign to be quickly exchanged, repaired or even replaced with little downtime. That is, it is possible to give flexibility to change of the sign hardware.

In an example, the electronic sign comprises one or more LED strips, comprising flexible circuit board surface mounted LEDs.

The light fixture may be configured for flexible circuit boards with surface mounted LEDs. This has the advantage of being flexible and therefore may follow certain organic or non-linear shaped body parts of the vehicle more easily.

In an example, the electronic sign comprises one or more LED strips, each comprising a LED fixture and a single LED.

The light fixture may also comprise one or more LED strips which are known per se therefore are of low costs, and readily available.

In an example, the LED fixture comprises an acrylic sheet for diffusion of the light of the single LED.

The light fixture may also have housing with an acrylic sheet as a window to emit the light of the LED or LEDs out of the housing. The acrylic sheet has the effect of diffusing the light beam. Such diffused light is more uniform and provides a more uniform distribution of the light across a certain area. It may also reduce glare as a non-diffused light of a LED may produce a concentrated beam that is intense and might cause hinder. It also improves the visibility and the aesthetics of the light and therefore will have a better acceptance. Finally, it also improves the efficiency and lifespan as a lower intensity of light may be used to achieve the same level of visibility as compared to conventional LED light fixtures without such acrylic sheet for the diffusion of the light.

In an example, the LED light comprise one of single color, multicolor non-addressable, RGB addressable multicolor, RGBW non-addressable or RGBCCT/RGBWW addressable multicolor LEDs.

The light fixture may comprises one or more or even a combination of the foregoing types of LED light sources. Each type of light source has its own advantages and the skilled person will appreciate and recognize these advantages and select the most suitable one.

In an example, the electronic sign is comprised in a housing comprising a main body part to which said LED light is attached, and a translucent window enclosing said main body part.

This has the effect, that the main body part of the housing may be fixed in a mechanical manner to the vehicles body parts and the window enclosing the main body part may be detachable from the main body. This way the circuitries and LED light sources may be accessible by removing the window without having to disassembling the whole fixture from the vehicle.

In an example, the translucent window comprises a diffuser for diffusing light exiting said electronic sign.

The acrylic sheet may be used as a type of diffuser, but the housing may also have a different type of diffuser, for example frosted glass, prismatic lenses, opal diffusers, lenticular lenses or bounced diffusers in which a reflective material is used to bounce and scatter the light.

In an example, the controller is further arranged to control an intensity of said LED light in accordance with a level of daylight determined by a daylight sensor attached to the vehicle bus.

Preferably, the LED light intensity may be controllable and controlled either by manual control from within the vehicle, or automatically, e.g. based on the current level of daylight and/or weather conditions. These may be obtained automatically from the vehicle bus, or from sensors or other circuitry connected to the vehicle bus.

A preferred embodiment of the present invention is to have automatic activation and/or increase or decrease of the lights intensity in accordance with the actual location of the vehicle. For example, when the vehicle nears a certain stop, i.e. a line stop of a bus route, the lights may be activated and when the bus departs from the stop, the lights might be de-activated. More in particular, the stop may be indicated as a certain specific location. A first distance level may be defined which is defined as a certain distance from this location, e.g. 50 meters, 40 meters, 30 meters, 20 meters or 10 meters. When the vehicle is within this distance, the lights can be activated and when the vehicle is beyond this distance, the lights can be deactivated. In a further example the lights can be activated in a controlled manner in which the intensity of the lights will first be increased at a first distance, and fully activated upon the second distance, wherein the second distance is closer to the destination than the first. The skilled person will appreciate which other variants can be applicable and suitable upon defining one, two or multiple distance levels and the controller being able to determine which distance level the vehicle is in, and drive the LEDs accordingly.

In an example, the obtained control signals from the vehicle bus are generated through manual input of the route by a driver of the public transport vehicle.

In an example, the obtained control signals from the vehicle bus are generated through automatic route determination by a positioning system attached to the vehicle bus.

The control of the LEDs might be done manually, from within the vehicle, by the driver, or may be done automatically with a positioning system such as a global positioning system, that is located in the vehicle and integrated into a certain module that is part of the vehicles bus, or a certain dedicated device attached to the vehicles bus.

In an example, the controller activates and deactivates the electronic sign based on a predetermined degree of proximity of the vehicle to one or more predetermined locations such as bus stops.

In an example, the destination sign system includes a passenger interaction module communicatively connected to the controller, wherein said module is configured to receive input from passengers through an onboard user interface or a mobile application. The controller adjusts the color and intensity of the LED lights based on this input, enabling real-time optimization of route visibility and recognition. This feature solves the problem of ensuring that route information is effectively conveyed to passengers with varying needs, such as those with limited familiarity with the transit system or specific visual impairments. By dynamically tailoring the display based on passenger input, the system achieves a level of adaptability and user-friendliness that is unexpected in conventional systems, which are limited to static or pre-configured settings.

In an example, the destination sign system is further configured to adapt the intensity and color temperature of the LED lights in response to environmental conditions detected by a light sensor integrated with the vehicle. Weather data, such as ambient brightness or cloud cover, can also be factored into these adjustments. This arrangement ensures that the display remains highly visible under varying conditions, such as strong sunlight or dim evening light. The problem of inconsistent visibility in different lighting environments is effectively addressed through this adaptive control. This solution provides a degree of visual consistency that significantly improves passenger experience, particularly in challenging environments.

In an example, the electronic sign system comprises a modular LED matrix, wherein each module is independently replaceable and incorporates diagnostic circuitry that communicates with the controller. The controller monitors the performance of individual modules and compensates for any detected faults by adjusting the operation of adjacent modules to maintain uniformity in the display. This configuration addresses the problem of prolonged downtime and costly repairs associated with traditional systems. By enabling modular maintenance with continuous operation, the system ensures high availability and reliability, offering practical advantages that are not typically associated with conventional destination signs.

In an example, the controller is further configured to activate or modify the electronic sign's display output when the vehicle enters a predefined proximity zone of a stop or destination. This activation is determined based on real-time location data provided by an integrated positioning system. The system may employ visual transitions such as blinking, pulsing, or intensity changes to signal the vehicle's approach. This feature solves the problem of passengers missing vehicles or failing to recognize their intended route at crowded stops by providing enhanced visual cues. Such an approach ensures timely and clear communication, which is particularly valuable in busy urban environments where traditional static displays may fail to capture attention.

In an example, the electronic sign is divided into multiple independently controllable LED zones. The controller selectively activates these zones based on factors such as route complexity or passenger density at specific stops. For example, the system can conserve energy by dimming less critical zones while maintaining the visibility of essential route information. This configuration solves the problem of high energy consumption in public transport systems while ensuring that passengers receive clear and reliable information. The capability to balance energy efficiency with effective communication is a distinct advantage over existing systems, which typically lack such targeted control.

In another example, the electronic sign system incorporates redundant LED paths within each display unit, allowing the controller to detect and bypass faulty LEDs automatically. This arrangement ensures uninterrupted color uniformity and functionality of the display, even in the event of individual LED failures. The problem of degraded performance due to hardware faults is addressed in a straightforward yet highly effective manner, ensuring that the display remains operational and visually consistent. This design not only enhances reliability but also simplifies maintenance by reducing the frequency of necessary interventions.

The skilled person will appreciate that the effect, advantages and examples discussed and disclosed in relation to the first aspect of the present invention are also applicable to this method for general clinical data.

It will be understood that the above-described embodiments are not meant to limit the invention, whose scope is solely determined by the claims. In particular, the skilled person will appreciate that various individual or combined features selected from various embodiments within this description (above and below) may be added to other embodiments as long as there is no technical hindrance to doing so, without departing from the scope of the invention as defined by the claims.

### BRIEF DESCRIPTION OF THE DRAWINGS

The embodiments described herein will be more fully understood with the help of the detailed description below and with reference to the appended drawings, in which:
Fig. 1 illustrates a public transport vehicle, in particular a bus, according to an aspect of the present disclosure;
Fig. 2 illustrates a detail of a destination sign in accordance with an aspect of the present disclosure;
Fig. 3 illustrates an approaching and exiting route for public transportation vehicles, in particular a bus, according to an aspect of the present disclosure.

### DETAILED DESCRIPTION

The present invention relates to a destination sign system designed for public transport vehicles, particularly addressing the challenges associated with conveying accurate, real-time route information in areas with multiple routes. Traditional static destination signs on public transport vehicles, such as buses, often fall short in providing dynamic and easily visible and easily interpretable information, leading to confusion and inconvenience for passengers. This invention aims to revolutionize the way destination information is communicated by introducing an electronic sign system that incorporates advanced features for efficient and user-friendly navigation.

Public transport vehicles play an important role in urban transportation. Buses, trams, and metros are vital components of urban transit systems, serving a large number of passengers daily. However, the efficiency of these systems heavily depends on the accuracy and visibility of destination information. The present disclosure relates to destination signs systems for such public transport vehicles like urban transport systems, trams, metro's an in particular buses. Traditional types of destination sign systems are typically static signs which are limited in their display capabilities and struggle with real-time updates, which can lead to outdated or inaccurate information, contributing to passenger confusion and inconvenience.

With the destination sign system according to the present disclosure, these limitations are overcome by introducing a system that utilizes an electronic sign and a controller. This system is not only capable of displaying route information in a dynamic manner, but also addresses the challenges associated with conveying this information effectively in areas with multiple routes.

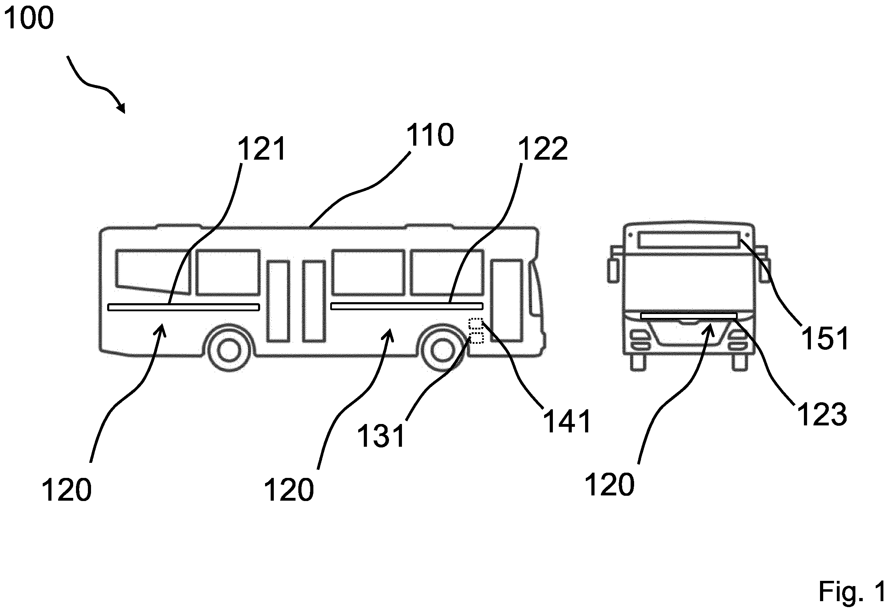

Fig. 1 illustrates an embodiment 100 of an aspect of the present disclosure, wherein a system is shown which is designed, arranged and configured to be mounted on, or integrated with the bodywork of the vehicle 110, ensuring visibility along multiple sides. This is shown in Fig. 1, wherein the bus 110 typically incorporates a traditional route indication system with a route sign 151 on the front of the bus. The system according to the present disclosure consists of multiple signs 120, incorporated on the bus 110 at the first electronic sign 123, located at the front side of the bus, and at least one second electronic sign 122 on the side of the bus 110. The signs 120 may also comprise a third electronic sign 121 or further electronic signs on the front, side or back (whereas the third sign is shown and the others are not shown in Fig. 1). The electronic signs 120 incorporate Light Emitting Diode (LED) lights, and a controller 141, in communicative connection with the signs 120, which interface with a vehicle bus 131 to obtain control signals comprising real-time route information.

One of the features of the proposed destination sign system is its adaptability to different public transport vehicles, including buses, trams, and metros. It is emphasized that the invention is not limited to buses, highlighting its applicability to various modes of public transportation. This inclusivity ensures that the benefits of the destination sign system can be extended across different urban transit systems, catering to the diverse needs of passengers and transportation authorities.

The invention introduces a dynamic route indication system, inspired by the simplicity and effectiveness observed in metro systems. In contrast to static signs displaying line numbers or final destinations, the proposed system leverages color-coded indications for routes. The electronic sign, equipped with LED lights, is configured to change colors dynamically based on the current route. This approach simplifies and enhances route indication, providing a quick, simple, and effective means for passengers to identify the correct vehicle for their intended destination.

Practical considerations are also addressed with the proposed system and invention, with a focus on the ease of implementation and maintenance. The electronic sign is configured as being retrofittable onto the bodywork of the vehicle, allowing for straightforward integration without necessitating structural changes. This retrofit capability ensures that existing buses can be upgraded with the destination sign system without extensive modifications, preserving their compliance with regulatory inspections. Moreover, the sign is designed to be detachable, facilitating quick exchanges, repairs, or replacements with minimal downtime. This feature enhances the system's flexibility and ease of maintenance, making it a practical solution for public transport fleets.

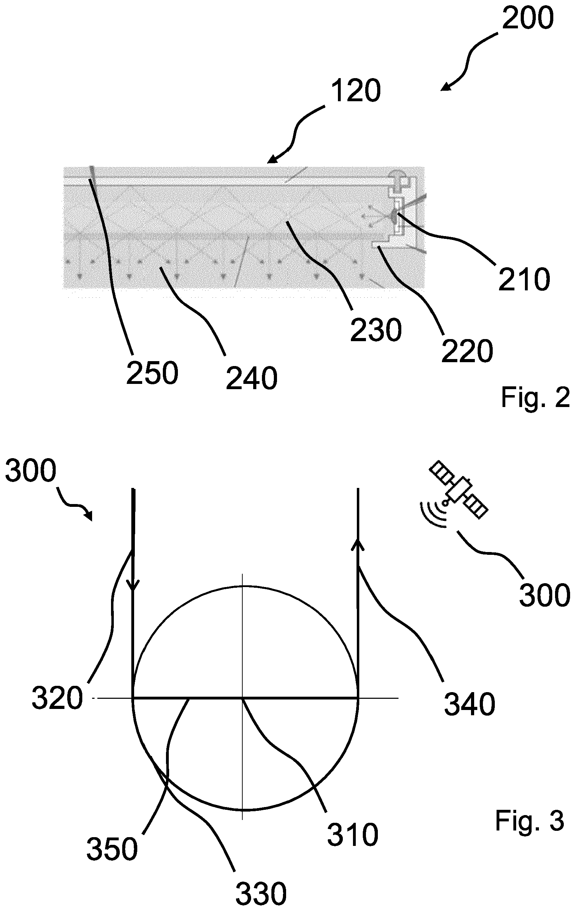

In Fig. 2 an embodiment 200 is shown with details of the sign 120 and its luminaire fixture. It is emphasized that the embodiment shown in the figures and thus also in Fig. 2 is an example of the system of the present invention and that different configurations of the system and signs are covered by the appending claims, to accommodate various preferences and requirements. The invention details examples such as LED strips with flexible circuit board surface-mounted LEDs and LED strips with single LED fixtures. Each configuration may be chosen in accordance with required and/or desired flexibility, adaptability, and overall performance. For instance, flexible circuit boards with surface-mounted LEDs allow the sign to conform to the organic or non-linear shapes of the vehicle's body, ensuring a seamless integration that does not compromise aesthetics.

The embodiment shown in Fig. 2 in particular emphasis on the importance of light diffusion for optimal visibility and aesthetics. In the shown embodiment, the LED fixture 120 comprises a single LED light source 210, disposed at a distal longitudinal end of the fixture 120. The LED light source 210 is directed for the light to illuminate in a longitudinal direction into the fixture in and through an acrylic sheet 230. The sheet provides a more uniform light distribution, reducing glare and improving the overall visibility and aesthetics of the destination sign. Additionally, the use of diffused light allows for the achievement of the same level of visibility with lower intensity, contributing to energy efficiency and an extended lifespan of the LED lights. The sheet, or in another example, another type of light diffusion layer to diffuse and direct the light from the light source into a desired direction, and the backing 250 and a light source itself 210 are clamped together to form the fixture by a fixing element 220 or housing part 220. This combination or sandwich provides a clear, diffused light pattern 240 in the desired direction.

The controller's role in the destination sign system is very relevant. It is emphasized that the controller 141 is in communicative connection with the electronic sign, either through a wired or a wireless communication channel, and interfaces with the vehicle bus 131 to obtain real-time control signals comprising route information. This information is then utilized by the controller to adjust not only the color but may also change the intensity of the LED lights, ensuring that passengers receive accurate and easily discernible destination information as the vehicle progresses along its route. This real-time adaptability is a key feature that distinguishes the destination sign system from static and conventional alternatives.

In addressing the challenges faced by passengers in locations with multiple vehicles and routes, the system proposes an innovative solution. The destination sign system's controller is equipped to activate and deactivate the electronic sign based on the vehicle's proximity to predetermined locations, such as bus stops. This is shown in Fig. 3. It shows a route 320, 330, 340, in which the vehicle approaches a stop 310. If the vehicle is within a certain range, defined by a preset distance 350 of the stop 310, and detected by a positioning system such as a GPS system as shown in the Figure, the system can be informed accordingly by activating the electronic sign 120. This feature ensures that the destination information is displayed at least at the most relevant times, optimizing passenger awareness and reducing potential confusion. The location detection and activation can also be implemented by changing the way in which the sign is driven. For example, the intensity of the light can change, the sign can start blinking, dimming, shading or any possible way of indication to inform passengers accordingly. Hence, the color may correspond to a certain route and hence, destination, whereas a blinking or other type of change of driving the lights may indicate and signal additional information.

## Claims

1. A destination sign system for a public transport vehicle, for indicating a destination of vehicle, wherein said system comprises an electronic sign and a controller, said electronic sign being arranged to be mounted on, or integrated with, the bodywork of the vehicle, to display an indication of the vehicle's route, and wherein said controller is in communicative connection with said electronic sign to control said indication displayed by said electronic sign, said controller interfacing with a vehicle bus for obtaining control signals comprising route information of said vehicle, and wherein said electronic sign is provided on, or integrated with the bodywork of the vehicle along multiple sides of said vehicle, and comprising light emitting diode, LED, light, wherein said controller is arranged to control a colour of said LED light in accordance with said vehicle's route obtained by said control signals through said interface with said vehicle bus.

2. The destination sign system for a public transport vehicle according to claim 1, wherein said electronic sign is retrofitted onto said bodywork of the vehicle along multiple sides of said vehicle.

3. The destination sign system for a public transport vehicle according to claim 2, wherein said electronic sign comprises one or more LED strips, comprising flexible circuit board surface mounted LEDs, and wherein preferably the LED light comprise one of single color, multicolor non-addressable, RGB addressable multicolor, RGBW non-addressable or RGBCCT/RGBWW addressable multicolor LEDs.

4. The destination sign system for a public transport vehicle according to claim 2, wherein said electronic sign comprises one or more LED strips, each comprising a LED fixture and a single LED, and wherein preferably said LED fixture comprises an acrylic sheet for diffusion of the light of the single LED.

5. The destination sign system for a public transport vehicle according to any of the previous claims, wherein said electronic sign is comprised in a housing comprising a main body part to which said LED light is attached, and a translucent window enclosing said main body part, and wherein preferably said translucent window comprises a diffuser for diffusing light exiting said electronic sign.

6. The destination sign system for a public transport vehicle according to any of the previous claims, wherein said controller is further arranged to control an intensity of said LED light in accordance with a level of daylight determined by a daylight sensor attached to the vehicle bus.

7. The destination sign system for a public transport vehicle according to any of the previous claims, wherein the obtained control signals from the vehicle bus are generated through manual input of the route by a driver of the public transport vehicle.

8. The destination sign system for a public transport vehicle according to any of the previous claims, wherein the obtained control signals from the vehicle bus are generated through automatic route determination by a positioning system attached to the vehicle bus.

9. The destination sign system for a public transport vehicle according to claim 7 or 8, wherein the controller activates and deactivates the electronic sign based on a predetermined degree of proximity of the vehicle to one or more predetermined locations such as bus stops.

10. The destination sign system for a public transport vehicle according to any of the previous claims, wherein the system further comprises a passenger interaction module communicatively connected to the controller, wherein the module is configured to receive input from passengers through an onboard user interface or a mobile application, and wherein the controller is configured to adjust the color and intensity of the LED lights based on the received input.

11. The destination sign system for a public transport vehicle according to any of the previous claims, wherein the controller is further configured to adapt the intensity and color temperature of the LED lights in response to environmental conditions detected by a light sensor integrated with the vehicle.

12. The destination sign system for a public transport vehicle according to any of the previous claims, wherein the electronic sign system comprises a modular LED matrix, each module being independently replaceable and incorporating diagnostic circuitry that communicates with the controller to monitor module performance and compensate for any detected faults.

13. The destination sign system for a public transport vehicle according to any of the previous claims, wherein the controller is further configured to activate or modify the electronic sign's display output when the vehicle enters a predefined proximity zone of a stop or destination, wherein the proximity zone is determined based on real-time location data provided by an integrated positioning system.

14. The destination sign system for a public transport vehicle according to any of the previous claims, wherein the electronic sign is divided into multiple independently controllable LED zones, and wherein the controller is configured to selectively activate the LED zones based on factors such as route complexity or passenger density at specific stops.

15. The destination sign system for a public transport vehicle according to any of the previous claims, wherein the electronic sign system comprises redundant LED paths within each display unit, and wherein the controller is configured to detect and bypass faulty LEDs to ensure uninterrupted color uniformity and functionality of the display.
